# EUROPÄISCHE PATENTSCHRIFT

(11) **EP 1 904 753 B1**
(45) Veröffentlichungstag und Bekanntmachung des Hinweises auf die Patenterteilung: **16.09.2009**
(21) Anmeldenummer: 06761792.8
(22) Anmeldetag: 12.07.2006
(51) Int. Cl.: F16C 9/02, F16C 33/10

(54) **LAGERSCHALE UND VERFAHREN ZU IHRER HERSTELLUNG**
BEARING SHELL AND METHOD FOR THE PRODUCTION THEREOF
COUSSINET ET PROCEDE DE FABRICATION ASSOCIE

(30) Priorität: 14.07.2005 DE 102005032852
(43) Veröffentlichungstag der Anmeldung: 02.04.2008
(73) Patentinhaber: Federal-Mogul Wiesbaden GmbH, 65201 Wiesbaden (DE)
(72) Erfinder: KLEIN, Martin, 65396 Walluf (DE)
(74) Vertreter: Fuchs
(86) Internationale Anmeldenummer: PCT/DE2006/001206
(87) Internationale Veröffentlichungsnummer: WO 2007/006291

(56) Entgegenhaltungen:
- US-A- 4 017 127
- US-A- 4 231 623

## Beschreibung

Die Erfindung betrifft ein Herstellungsverfahren für eine Lagerschale mit zwei sich in Umfangsrichtung erstreckenden Ölnuten, wobei von einem Bandmaterial eine rechteckige Platine abgetrennt und diese Platine zu der Lagerschale umgeformt wird.

Derartige Lagerschalen werden beispielsweise als Unterschalen in Kurbelwellenlagern eingesetzt. Wie beispielsweise der US 4,017,127 und der US 4,714,356 zu entnehmen ist, erstrecken sich die Ölnuten hierbei nur über einen begrenzten Winkelbereich, der durch das Herstellungsverfahren limitiert ist. Die Ölnuten werden nämlich durch einen Fräsvorgang in die bereits fertige Lagerschale eingebracht, was nur eine Nutlänge über einen Winkelbereich von maximal 45° zulässt.

Um eine bessere Schmierölversorgung im Scheitelbereich zu erzielen, ist eine Verlängerung der Schmierölnut wünschenswert. Aus der DE-OS 26 17 843 ist diesbezüglich eine Lagerschale mit drei in Umfangsrichtung hintereinander angeordneten Ölnuten bekannt, die mittels Scheibenfräser in Form von Schlitzen in die fertige Lagerschale eingestochen werden. Die Ölnuten laufen in Umfangsrichtung beidseits jeweils in Form von Zylindermantelflächen aus, so dass zwischen den Ölnuten und im Bereich der Teilflächen der Lagerschale Stege verbleiben. Diese Stege unterbrechen zugleich aber auch die Schmierölversorgung.

Gleichzeitig wird auch eine Vergrößerung des Strömungsquerschnittes angestrebt, was bei Ölnuten mit Nutgrund zu einer Materialverringerung im Nutgrund führt. Dadurch leidet allerdings die Stabilität der Lagerschale. Eine Verbreiterung der Ölnut ist nur begrenzt möglich, weil damit eine Verringerung des Tragflächenanteils einhergeht.

Aufgabe der Erfindung ist es, ein Herstellungsverfahren bereitzustellen, das die genannten Nachteile vermeidet. Es ist auch Aufgabe der Erfindung, ein entsprechendes Herstellungsverfahren anzugeben.

Gelöst wird die Aufgabe durch ein Herstellungsverfahren mit den Merkmalen des Anspruchs 1.

Es hat sich überraschend herausgestellt, dass die Stabilität der Lagerschale nicht beeinträchtigt wird, wenn dort, wo bei den bekannten Lagerschalen die Ölnut angeordnet ist, eine schlitzförmige Ausnehmung angebracht wird. Die Ausnehmungen sind vorzugsweise mittig angeordnet, so dass beidseitig zwei gleich große fingerartige Bereiche verbleiben. Der Querschnitt der Ausnehmungen ist durch den Wegfall des den Nutgrund bildenden Materials deutlich vergrößert, wodurch ein Ölkanal gebildet wird. Für die Tiefe dieser Ölkanäle steht die gesamte Dicke der Lagerschale zur Verfügung.

Das Verfahren zur Herstellung einer solchen Lagerschale, wobei von einem Bandmaterial die rechteckige Platine abgetrennt und diese Platine zur Lagerschale umgeformt wird, sieht vor, dass die Ölnuten in die Platine eingebracht werden, indem schlitzförmige Ausnehmungen, die sich von den Schmalseiten in Längsrichtung der Platine über einen Winkelbereich α von bis zu 60°erstrecken, ausgestanzt werden.

Der aufwendige Fräsvorgang zur Herstellung der Ölnut in der fertigen Lagerschale entfällt, weil bereits bei der Platinenherstellung die Ausnehmungen vorgesehen werden.

Es ist dadurch möglich, auch Ausnehmungen herzustellen, die sich über einen größeren Winkelbereich als 45° der fertigen Lagerschale erstrecken.

Der Ausstanzvorgang kann während des Abtrennens der Platinen vom Bandmaterial durchgeführt werden. Vorzugsweise wird das Abtrennen und Ausstanzen in einem Arbeitsgang durchgeführt, so dass bei der Herstellung der Platinen keine Zeitverluste auftreten.

Um den rampenartigen Abschnitt am inneren Ende der Ausnehmungen anzubringen, ist ein entsprechender Arbeitsgang an der Platine oder an der fertigen Lagerschale vorgesehen.

Vorzugsweise wird dieser rampenartige Abschnitt eingefräst, was gegebenenfalls auch an der fertigen Lagerschale durchgeführt werden kann.

Beispielhafte Ausführungsformen der Erfindung werden nachfolgend anhand der Zeichnungen näher erläutert.

Es zeigen:
- Figur 1: eine Lagerschale in perspektivischer Darstellung,
- Figur 2: einen Schnitt längs der Linie II-II durch die in Figur 1 gezeigte Lagerschale,
- Figur 3: einen Schnitt gemäß Figur 2 einer Lagerschale gemäß einer weiteren Ausführungsform, und
- Figur 4: eine schematische Darstellung des Herstellungsverfahrens der Platinen zur Herstellung der Lagerschalen.

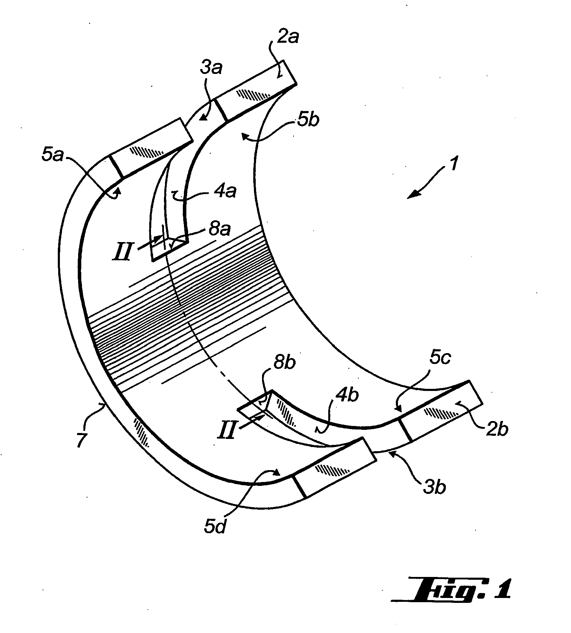

In der Figur 1 ist eine Lagerschale 1 dargestellt, die Teilflächen 2a, 2b aufweist. Von den Teilflächen 2a, 2b erstrecken sich in Umfangsrichtung in Richtung Scheitel 7 schlitzförmige Ausnehmungen 4a, 4b. Diese schlitzförmigen Ausnehmungen sind vorzugsweise mittig zwischen den beiden Stirnseiten der Lagerschale angeordnet, so dass beidseitig gleich breite Finger 5a, 5b bzw. 5c, 5d stehen bleiben. Im eingebauten Zustand dienen diese schlitzartigen Ausnehmungen 4a, 4b als Ölkanäle 3a, 3b und ersetzen die herkömmlichen Ölnuten.

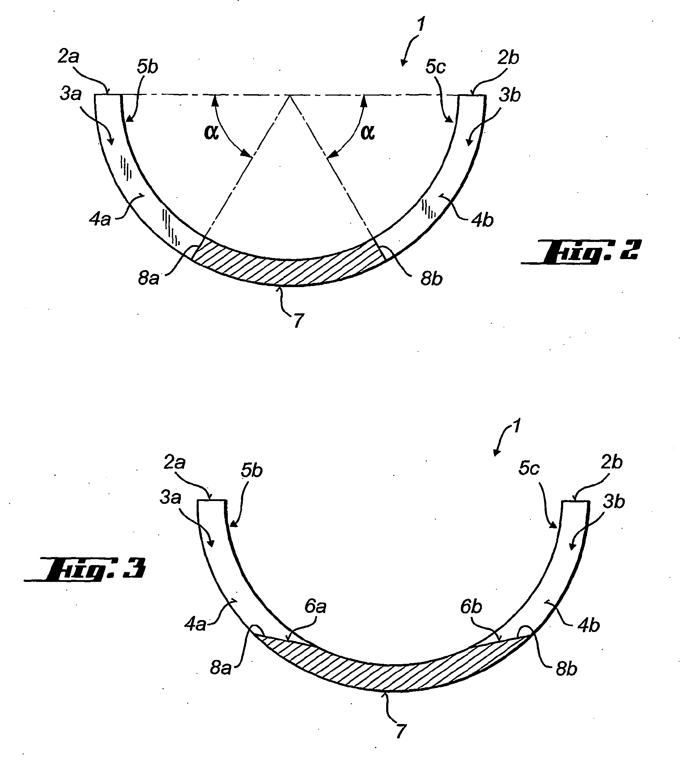

In der Figur 2 ist ein Schnitt längs der Linie II-II der in Figur 1 gezeigten Lagerschale 1 dargestellt. Der Winkelbereich α, über den sich die beiden Ausnehmungen 4a, 4b erstrecken, ist mit α gekennzeichnet. Der hier eingezeichnete Bereich erstreckt sich über ca. 60°.

In der Figur 3 ist eine weitere Ausführungsform dargestellt, bei der an den inneren Enden 8a, 8b der Ausnehmungen 4a, 4b jeweils ein rampenartiger Abschnitt 6a, 6b angeordnet ist. Dieser rampenartige Abschnitt dient dazu, das in Richtung Scheitel strömende Öl auf die Innenfläche der Lagerschale zu befördern, um dort die gewünschte Schmierwirkung zu erzielen.

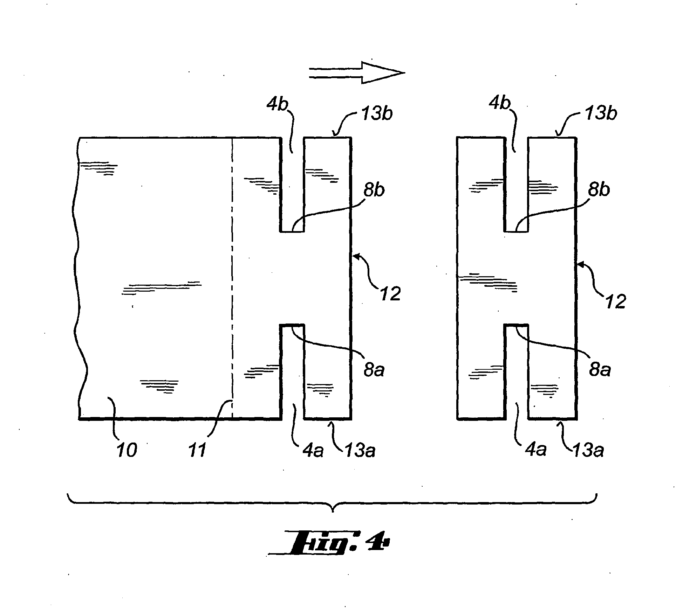

In der Figur 4 ist ein Bandmaterial 10 dargestellt, von dem längs der Trennlinie 11 Platinen 12 abgetrennt werden. An den Schmalseiten 13a, 13b der Platinen 12 werden Ausnehmungen 4a, 4b ausgestanzt. Dieses Ausstanzen kann mit dem Abtrennen der Platinen 12 kombiniert werden, wenn entsprechende Trennmesser verwendet werden.

### Bezugszeichen

- 1: Lagerschale
- 2a,b: Teilfläche
- 3a,b: Ölkanal
- 4a,b: Ausnehmung
- 5a,b,c,d: Finger
- 6a,b: rampenartiger Abschnitt
- 7: Scheitel
- 8a,b: inneres Ende

- 10: Bandmaterial
- 11: Trennlinie
- 12: Platine
- 13a,b: Schmalseite der Platine

- α: Winkelbereich

## Patentansprüche

1. Verfahren zur Herstellung einer Lagerschale mit zwei sich in Umfangsrichtung erstreckenden Ölnuten, wobei von einem Bandmaterial (10) eine rechteckige Platine (12) abgetrennt und diese Platine (12) zu der Lagerschale (1) umgeformt wird, **dadurch gekennzeichnet, dass** die Ölnuten in die Platine (12) eingebracht werden, indem zwei Ausnehmungen (4a, 4b), die sich von den Schmalseiten (13a, 13b) in Längsrichtung der Platinen (12) über einen Winkelbereich von bis zu 60° erstrecken, ausgestanzt werden.

2. Verfahren nach Anspruch 1, **dadurch gekennzeichnet, dass** die Ausnehmungen (4a, 4b) während des Abtrennens der Platinen (12) vom Bandmaterial (10) ausgestanzt werden.

3. Verfahren nach einem der Ansprüche 1 oder 2, **dadurch gekennzeichnet, dass** das Abtrennen und Ausstanzen in einem Arbeitsgang erfolgt.

4. Verfahren nach einem der Ansprüche 1 bis 3, **dadurch gekennzeichnet, dass** in die Platine (12) oder in die Lagerschale (1) an den inneren Enden (8a, 8b) der Ausnehmungen (4a, 4b) jeweils ein rampenartiger Abschnitt (6a, 6b) eingebracht wird.

5. Verfahren nach Anspruch 4, **dadurch gekennzeichnet, dass** der rampenartige Abschnitt (6a, 6b) gefräst wird.

## Claims

1. Process for producing a bearing shell having two oil grooves extending in peripheral direction, wherein a rectangular plate (12) is separated from a strip material (10) and this plate (12) is shaped to form the bearing shell (1), **characterised in that** the oil grooves are introduced into the plate (12) by punching out two recesses (4a, 4b) which extend from the narrow sides (13a, 13b) in longitudinal direction of the plates (12) over an angular range of up to 60°.

2. Process according to claim 1, **characterised in that** the recesses (4a, 4b) are punched out during separation of the plates (12) from the strip material (10).

3. Process according to one of claims 1 or 2, **characterised in that** the separation and punching out is effected in one working step.

4. Process according to one of claims 1 to 3, **characterised in that** in each case a ramp-like section (6a, 6b) is introduced into the plate (12) or into the bearing shell (1) at the inner ends (8a, 8b) of the recesses (4a, 4b).

5. Process according to claim 4, **characterised in that** the ramp-like section (6a, 6b) is milled.

## Revendications

1. Procédé de réalisation d'un coussinet comportant deux rainures à huile qui s'étendent dans la direction périphérique, un flan (12) rectangulaire étant sectionné dans une bande de matériau (10) et ledit flan (12) étant formé pour obtenir le coussinet (1), **caractérisé en ce que** les rainures à huile sont ménagées dans le flan (12) en découpant dans ledit flan (12) deux évidements (4a, 4b) qui s'étendent depuis les petits côtés (13a, 13b) dans la direction longitudinale du flan (12) sur une plage angulaire allant jusqu'à 60°.

2. Procédé selon la revendication 1, **caractérisé en ce que** les évidements (4a, 4b) sont découpés pendant que le flan (12) est sectionné dans la bande de matériau (10).

3. Procédé selon la revendication 1 ou 2, **caractérisé en ce que** le sectionnement et le découpage sont réalisés en une seule étape de travail.

4. Procédé selon l'une quelconque des revendications 1 à 3, **caractérisé en ce que** respectivement un segment (6a, 6b) en forme de plan incliné est réalisé dans le flan (12) ou dans le coussinet (1) au niveau des extrémités intérieures (8a, 8b) des évidements (4a, 4b).

5. Procédé selon la revendication 4, **caractérisé en ce que** le segment (6a, 6b) en forme de plan incliné est fraisé.
